# EUROPEAN PATENT APPLICATION

(11) **EP 2 782 400 A1**
(43) Date of publication of application: **24.09.2014**
(21) Application number: 13160493.6
(22) Date of filing: 21.03.2013
(51) Int. Cl.: H04W 48/16

(54) **NFC controller architecture for simultaneous emulation of multiple NFC technologies in one NFC listen device**

(71) Applicant: ST-Ericsson SA, 1228 Plan-les-Ouates (CH)
(72) Inventor: Socol, Constantin, 596717 Singapore (SG); Badiu, Adrian Sorin, 598727 Singapore (SG); Hussain, Jafer, 669597 Singapore (SG)
(74) Representative: Kemp, Paul Geoffrey

(57) **Abstract**

An NFC enabled listening device (2) is capable of communication with an NFC enabled reading device in any of several NFC technologies, exemplified by NFC-A, NFC-B, NFC-F and NFC-V. To facilitate selection of the optimum communication technology, and to minimise time and energy consumption, the NFC enabled listening device (2) is provided with a plurality of control modules (4a-4d) each configured to decode only one of the several NFC technologies.

## Description

### Technical field

The present invention concerns near field communication (NFC). Near field communication is a short range (0.1 m or less) contactless communication system using magnetic field induction. Near field communication is mainly exemplified by communication between devices using standards developed by the NFC Forum such as the publications ISO/IEC FDIS 14443 and Sony FeliCa. However, non-NFC standards also exist and may fall within the scope of this specification. NFC ordinarily operates between devices at a frequency of 13.56 MHz.

### Background art

In near field communication an initiator generates an activating radio frequency (RF) field which provokes a target device to transmit data for reception by the initiator. The initiator is also sometimes known as a reader or proximity coupled device (PCD). The listening device is often known as a tag or card (PICC).

Non-exhaustive examples of embodiments of NFC enabled devices include: security gates such as turnstiles, pass cards such as a rail travel pass and NFC enabled mobile phones. The turnstile includes an NFC enabled *reader* able to actively poll a *listening* device such as the pass card. When polled the pass card will respond with a poll response signal to communicate data which will allow the holder to pass through the turnstile. Most commonly such turnstile systems use only one of the several transmission technologies exemplified in NFC standards as NFC-A, NFC-B, and NFC-F. The NFC Forum defines a technology as "A group of transmission parameters defined by the NFC standard that makes a complete communication protocol. A non-exhaustive list of transmission parameters is: RF carrier, communication mode, bit rate, modulation scheme, bit-level coding, frame format, protocol, and command set. NFC defines three groups and therefore three technologies: NFC-A, NFC-B, and NFC-F. The three technologies use the same RF carrier (13.56 MHz). Each technology uses its own modulation scheme, bit-level coding, and frame format, but may have the same protocol and command set". In this specification the term technologies or NFC technologies includes proprietary NFC technologies in addition to those defined by the NFC Forum.

Where the transmission technology is predetermined because a specific pass works with a specific turnstile, there is no difficulty in establishing communication. The different communication technologies enable different amounts of data transmission, speeds of data transmission and levels of security.

Increasingly mobile phones and other mobile computing devices such as tablets, personal digital assistants, etc. are NFC enabled. This allows the mobile phone to, for example: receive data from a "poster", serve as a travel pass, act as a credit card and to establish peer to peer communication with similarly enabled devices with minimal guidance from the user. The low security, high volume and high speed requirements for communicating non-critical data from a poster are quite different from the low volume secure data requirements of a credit card. Accordingly, a mobile phone should be capable of emulating many or all NFC technologies and may act in either of the roles of active reader or passive listening device.

The multiple NFC functions exemplified by the pass card, credit card, poster reader and travel pass are generically known as applications in this specification and should not be understood to be limited to the particular examples given. The NFC Forum has established the three main technology air interfaces, namely: NFC-A (ISO/IEC 14443 A based), NFC-B (ISO/IEC 14443 B based) and NFC-F (FeliCa based). To support all the different technologies, an NFC reading device in polling mode first attempts to get responses from NFC-A, then NFC-B and finally NFC-F listening devices with the corresponding poll request signals. Table 1 below shows the key differences between NFC-A, NFC-B and NFC-F. For example, NFC-A technology encodes data using modified miller coding, NFC-B uses NRZ-L encoding while NFC-F uses Manchester encoding. For the reader to accurately read data from the listening device (i.e. to be compatible) the listening device must be able to encode and transmit the data with coding which can be decoded accurately by the reader. Parameters, such as those mentioned above, other than encoding will also need to be met by each of the reader and listening device for accurate data communication; such parameters are elucidated in the relevant NFC standards and will be evident to the skilled person.

NFC standards such as "NFCForum-TS-Activity-1.0 2010-11-18" specify a protocol for establishing the technology to use where more than one technology is available. The protocol requires the reader to emit an RF signal. The RF signal is followed by a polling signal which requests a response from a first of the available air interface technologies, for example NFC-A. The listening device will only respond if it is able to communicate using NFC-A technology. For a simple passive card only one technology is available, if that is not NFC-A, the reader will react in time to the lack of response by emitting a second polling signal in a second technology, for example NFC-B. This process is repeated until the listening device responds with a poll response signal indicating compatibility with the NFC technology.

If the listening device is an NFC-enabled device, such as a mobile phone, it is able to respond to every communication technology. Consequently, if any of the installed applications are compatible with the polling signal, the mobile phone will respond with a poll response signal. The reader has thus determined the presence of a listening device in the first, and only the first, communication technology polled. Under certain circumstances this may lead to an inefficient use of resources.

For example, if the reader is a mobile phone polling a listening device which is also a mobile phone, data transmission from the listening phone will take place using NFC-A technology at a rate of 106kbps if NFC-A technology is the first polled. An application communicating using the NFC-DEP protocol will, by default, proceed using NFC-A technology at 106kbps. However NFC-DEP protocol is compatible with both NFC-A and NFC-F. Where NFC-F technology is available to the listening device as well as NFC-A, it may be a more efficient use of time and energy for the communication to proceed using NFC-F technology at 212kbps or 424kbps.

NFC devices communicate using a range of technologies identified as NFC-A, NFC-B, ISO15693 and NFC-F. Respective distinguishing characteristics of each of these technologies are shown in the following Table 1:

| **TABLE 1** | | | |
|---|---|---|---|
| Technology | POLL Mode | Synchronisation | SOF: Start of Frame |
| | DATA encoding | | |
| NFC-A (ISO/IEC 14443 A) | Modified miller | No | Logic "0" |
| NFC-B (ISO/IEC 14443 B) | NRZ-L | Yes, NFC-B specific | Logic "0" |
| NFC-F (ISO FeliCa) | Manchester | Yes, NFC-F specific | 0xB24D (pattern) |
| ISO15693 (NFC-V) | 1 out of 256 | No | SOF 1 out of 256 |
| | 1 out of 4 | | SOF 1 out of 4 |

WO2009/081337 is one of many publications which describe the process of the reader and listening devices negotiating a communication technology settlement, particularly at pages 4-5, 7 and especially the last paragraph of page 8 and page 9.

### Statement of invention

Accordingly the present invention provides an NFC enabled listening device incorporating applications compatible with a plurality of NFC technologies, said listening device being adapted to respond to a poll request signal from an NFC enabled reader device polling for multiple NFC technologies; characterised in that the listening device is adapted by the provision of a controller which processes every compatible poll request technology.

According to a second aspect of the present invention there is provided a process of near field communications in a near field communication enabled device in a listening mode comprising the steps of:
receiving a polling signal from a proximate near field communication capable device in read mode polling for any of a plurality of NFC-technologies;
characterised by the step of sequentially processing every poll request technology compatible with the listening device.

The invention may be implemented by processing the poll signals in a listening device controller having a plurality of control modules. Each one of said plurality of control modules being adapted to correctly decode only one NFC technology during the polling cycle.

By virtue of the present invention the NFC enabled listening device receiving a first poll request signal will respond with each compatible NFC technology available to it. Thus if the poll request signal is NFC-DEP, the poll response signals would include NFC-A and NFC-F technology. Similarly a poll request signal for ISO-DEP would receive responses for each of the compatible NFC-A and NFC-B technologies.

A controller module for an NFC technology in a listening device may include: a technology detection block, a communication technology decoder block, an error detection block and a FIFO block. A device physical layer will communicate with the technology detection block.

For a possible NFC listening device with multiple communication technology compatibility, the decoder block will include capability to switch to any one of the compatible communication technologies detected by the technology detection block. The FIFO block will output to the device central processing unit (CPU). One possible implementation of the present invention may include the provision of complete controller structures, one each for each compatible NFC technology, thus for a device according to the invention at least two complete controller module structures would be present and communicating with the CPU.

In a preferred implementation of the present invention each controller module has a decoder block compatible with only one NFC technology, and a corresponding error correction block. An NFC physical device layer may communicate directly with each of the decoder blocks. The error checking block of each controller module may communicate with a single RX FIFO via a multiplexer. The RX FIFO then communicates with the device CPU.

Each compatible NFC technology is identified by processing each polling signal through the multiple controller modules. The CPU may then implement a selection process to select a preferred NFC technology based on criteria such as speed or security, and cause the transmission of a poll response signal to the reader in the selected technology. The NFC reader will then proceed in the NFC technology selected by the listening device and no modification of the reader device process is required.

### Brief description of the drawings

A near field communication device operating in listening mode and embodying the present invention will now be described, by way of example only, with reference to the accompanying illustrative figures, in which;
figure 1 A is a diagrammatic illustration of two near field communication devices implementing near field communication;
figure 1 B is a diagrammatic illustration of two different near field communication devices implementing near field communication;
figure 2 is a block diagram showing a first embodiment of the invention; and figure 3 is a block diagram showing a second embodiment of the invention.

### Detailed description

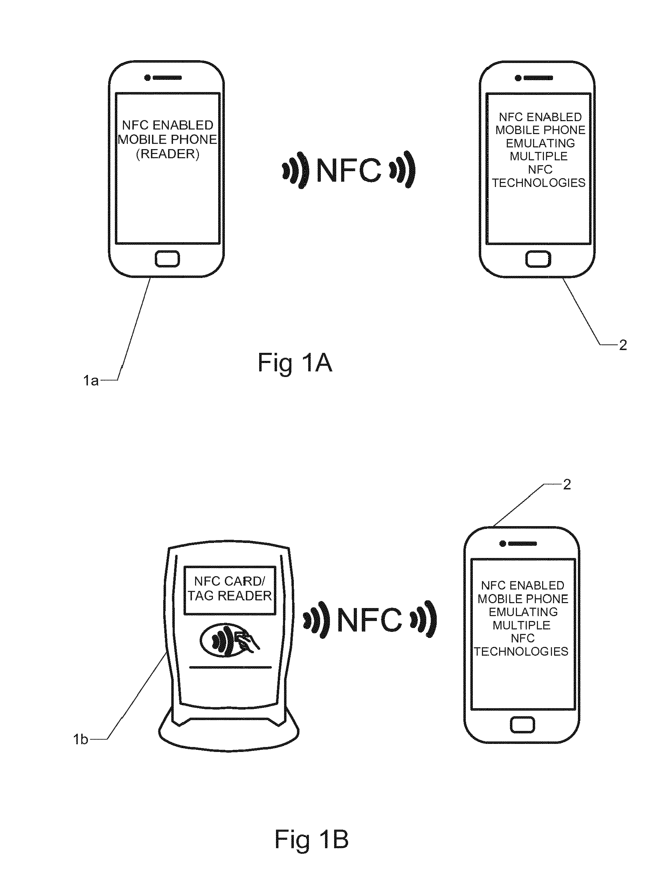

Figure 1 a illustrates the case of two mobile phones 1 a and 2 implementing near field communication, for example to establish a blue tooth connection. Mobile phone 1 a is acting as the reader. Mobile phone 1 a emits an RF field and, after a brief period, a sequence of poll signals to the mobile phone 2. In figure 1 B a single purpose reader device 1 b is acting to establish near field communication with the mobile phone 2. The behaviour of each of mobile phone 1 a or reader 1 b is identical for the purpose of the invention and consequently the invention will only be described in relation to the mobile phone reader 1 a.

Mobile phone 2 enters a listening mode when the RF signal is received from reader mobile phone 1 a by a physical layer 3 of mobile phone 2. Reader mobile phone 1 a then emits a first polling signal incorporating one specific NFC technology, e.g., NFC-A. This signal is received by mobile phone 2 and communicated to a controller 4 incorporating a plurality of controller modules 4a, 4b, 4c, 4d.

Each controller module 4a, 4b, 4c and 4d includes a technology detection block 5a, 5b, 5c, 5d which communicates with a corresponding NFC technology decoder block 6a, 6b, 6c, 6d, capable of decoding each technology (e.g. NFC-A, NFC-B, NFC-F or NFC-V). The decoder block communicates with an error detection block 7a, 7b, 7c and 7d. The each error detection block communicates with a corresponding FIFO block 8a, 8b, 8c, 8d. Each FIFO communicates with a central processing unit (CPU) 9.

After reception of the RF signal only the first controller module 4a will be enabled to process the first poll signal. The first technology detection block 5a detects the technology type of the received first poll request signal, i.e. NFC-A, NFC-B, NFC-F or NFC-V and switches the first decoder module 6a to the corresponding poll signal technology. The first decoder is latched to the switched NFC technology NFC-A until polling is completed. For example if the first command signal is received using NFC-A technology controller module 4a will latch to NFC-A for the remainder of the session. A second unlatched controller module 4b will then be enabled.

A second poll signal will be received from the reader according to the NFC standard in a different NFC technology. For example if a poll signal is received using NFC-B, the second technology detection module 4b will identify the technology and cause the second decoder 6b to switch and latch to the NFC-B decoding state. This process continues until all polling signals with different technologies have been received each NFC technology compatible with the reader have been identified by latching the decoders and the listening device polling is completed.

In this example the decoders 6 are each compatible with every technology, however certain applications will only be compatible with fewer technologies, e.g. NFC-A and NFC-F in which case the decoders 6 would be capable of switching to only those technologies with which the listening device application is compatible.

All controller modules that latch a technology will be enabled. Each compatible technology is now identified to the CPU 9. The CPU 9 will select one of the compatible NFC technologies based on predetermined criteria. The CPU will then cause the listening device 2 to generate a poll response signal according to the selected NFC technology.

After initial polling in all desired technologies, the NFC reader will perform collision resolution again, in all technologies where devices were discovered. Each command received will determine a certain error status in each of the controller modules. Only one controller will be able to correctly identify a received frame and correctly decode it with no error. Based on the status information the processor will retrieve the command from the FIFO of the CLF which has the command received with no error status.

The controller 4 may be implemented in hardware or software. Where the invention is to be implemented in software the invention may also comprise machine readable code recorded on media and adapted for installation onto an otherwise conventional mobile phone or other NFC enabled device.

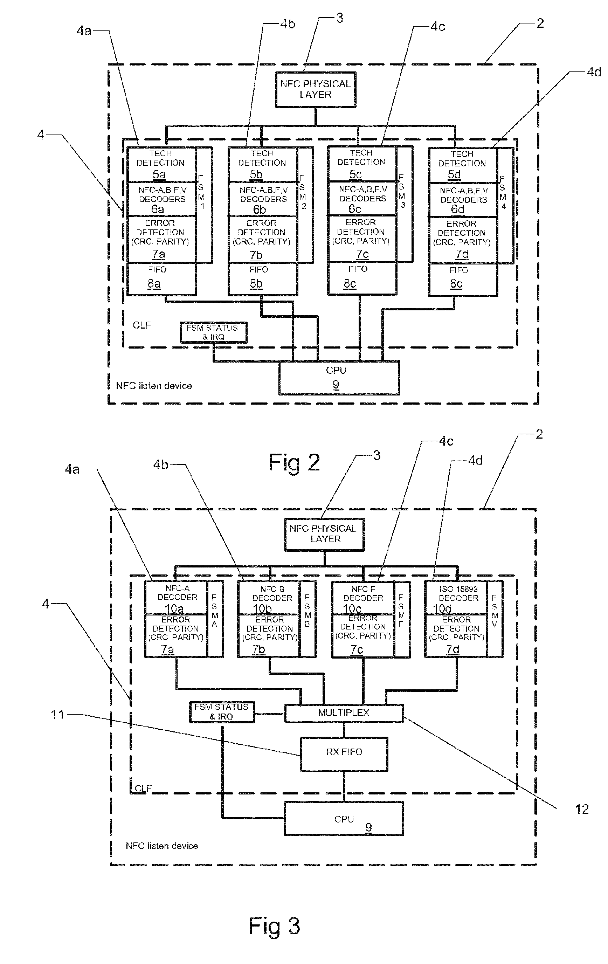

Figure 2 illustrates a second embodiment of the present invention with improved resource usage. The mobile phone 2 includes an NFC physical layer 3 similar to that of the first embodiment. The physical layer communicates with a controller 4. In this embodiment the controller 4 comprises four control modules 4a, 4b, 4c and 4d. Each of the controller modules comprises an NFC technology decoder block, 10a, 10b, 10c and 10d in communication with an error detection block 7a, 7b, 7c and 7d. Each of the decoder blocks 10a, 10b, 10c and 10d is dedicated to decoding only one NFC technology, as illustrated, decoder 10 is dedicated to NFC-A, decoder 10b to NFC-B, decoder 10c to NFC-F and decoder 10d to NFC-V.

A poll signal received by the physical layer of the listening mobile phone for NFC-A technology will only be correctly decoded by controller module 4a. Similarly controller module 4b will only correctly decode NFC-B technology signals and similarly for each of the remaining control modules. A signal from the reader mobile phone will therefore only be correctly decrypted by one controller module. Each decoder module communicates with a single, common, RX FIFO 11 through a common multiplexer 12.

Only controller modules compatible with the relevant application will be enabled.

The multiplexer is controlled by the decoder status because only one decoder will correctly decode the poll signal for any frame at a time. So if the signal received is a poll signal for NFC-B the signals received from each of controller modules 4a, 4c and 4d will contain decoder errors. The decoder reports its status to a register. The CPU 9 reads the decoder status from the register to retrieve the data from the FIFO for a certain technology.

It will be appreciated that although the invention has been described with reference to a mobile phone as each of the read mode device and listen mode device any kind of NFC enabled device with multiple NFC technology capabilities may be substituted for either the read mode device or the listen mode device. A non-exhaustive list of devices which might be NFC enabled includes personal digital assistants, net books, smart pads, e-readers, global navigation systems and contactless payment devices.

Emulation of multiple listen devices in different technologies based on the optimised architecture described using a single NFC controller has the advantage of better robustness and better costs efficiency. This invention reduces the number of cycles for the NFC reader as it allows the NFC reader to discover multiple NFC technologies of an NFC listen mode device in the shortest time during a single polling cycle, i.e. without shutting down and initiating the RF field. The NFC reader therefore, consumes less power. This invention offers flexibility for the NFC listening device to choose the NFC technology to use for data communication. Additionally, this invention also reduces the overall communication cycles and thus results in better user experience. The user will not have to re-configure the listen device for the next polling cycle - in the scenario when the NFC reader performs discovery for multiple technologies.

The NFC technologies have been described as NFC-A, NFC-B, NFC-F and NFC-V. However, other NFC technologies may exist or be developed and may be processed by the present invention.

## Claims

1. An NFC enabled listening device (2) including at least one application compatible with one NFC technology **characterised in that** the at least one application is compatible with more than one NFC technology, said listening device (2) being adapted to respond to a poll request signal from an NFC enabled reader device polling for multiple NFC technologies; whereby the listening device (2) is adapted to be controlled by a controller (4) which is configured to process every compatible NFC technology poll request type.

2. An NFC enabled listening device (2) according to claim 1 having a controller (4) comprising a plurality of controller modules (4a-4d).

3. An NFC enabled listening device (2) according to claim 2 wherein each controller module (4a-4d) comprises a technology detection block (5a-5d) capable of detecting the kind of NFC technology employed in a poll signal.

4. An NFC enabled listening device (2) according to claim 3 wherein each controller module (4a-4d) comprises a switching decoder (6a-6d) capable of switching to decode any one of the NFC technologies available to the listening device (2).

5. An NFC enabled listening device (2) according to claim 4 wherein, in a controller module, the switching decoder (6a-6d) responds to the technology detection block (5a-5d) to decode the one detected kind of the NFC technologies.

6. An NFC enabled listening device (2) according to claim 5 wherein each controller module (4a-4d) includes a latch which, during the device polling, responds to detection of a specific NFC technology and corresponding switching of the decoder block (6a-6d) to latch one controller module (4a-4d) to decode only one NFC technology.

7. An NFC enabled listening device (2) according to claim 6 wherein only controller modules which are latched and one unlatched controller module are enabled to process received signals and communicate with a central processing unit (9) of the device.

8. An NFC enabled listening device (2) according to claim 2 wherein each control module (4a-4d) comprises one NFC decoder block (10a-10d), each said NFC decoder block being capable of decoding only one of a plurality of different NFC technologies.

9. An NFC enabled listening device (2) according to claim 8 wherein each controller module (4a-4d) comprises an error detection block (7a-7d) and wherein the decoder block (10a-10d) of each control module (4a-4d) communicates with the error detection block (7a-7d) in the control module (4a-4d).

10. An NFC enabled listening device (2) according to claim 8 or 9 wherein each control module (4a-4d) communicates with a shared multiplexer module (12).

11. An NFC enabled listening device (2) according to any one of claims 8 to 10 wherein each control module (4a-4d) communicates with a shared FIFO.

12. An NFC enabled listening device (2) according to any one of claims 8 to 11 wherein each control module (4a-4d) communicates with a shared CPU (9).

13. An NFC enabled listening device (2) according to any one of the preceding claims wherein the device (2) is responsive to the controller (4) to select one of the NFC technologies determined as compatible and generate a poll response signal based on the selected NFC technology.

14. A process of near field communication in a near field communication enabled device in a listening mode comprising the steps of:
receiving a polling signal from a proximate near field communication enabled device in read mode polling for any of a plurality of NFC-technologies;
**characterised by** the step of sequentially processing every NFC technology poll request type compatible with the listening device to identify each compatible NFC technology.

15. A process according to claim 14 comprising the step of selecting one of the compatible NFC technologies identified and, emitting a poll response signal according to the selected NFC technology.
